Europäisches Patentamt

European Patent Office

Office européen des brevets

(11) Publication number: **0 376 153**
**A2**

## EUROPEAN PATENT APPLICATION

(21) Application number: **89123604.4**

(22) Date of filing: **21.12.89**

(51) Int. Cl.5: **B60R 7/12**

(30) Priority: **27.12.88 IT 2311288**

(43) Date of publication of application:
**04.07.90 Bulletin 90/27**

(84) Designated Contracting States:
**AT DE ES FR SE**

(71) Applicant: **Laksha S.A.**
**16 allée Marconi**
**L-2120 Luxembourg(LU)**

(72) Inventor: **Tatriele Costantino**
**via Lovere 3**
**I-Milano(IT)**

(74) Representative: **Freylinger, Ernest T. et al**
**Office de Brevets FREYLINGER & ASSOCIES**
**B.P. 1 321, route d'Arlon**
**L-8001 Strassen(LU)**

(54) **Umbrella holder for motor vehicles.**

(57) An umbrella holder for motor vehicles, consisting of a case (2) with an upper hole (4) for insertion of the umbrella and a longitudinal lateral opening (6) to facilitate the introduction of the umbrella (5) into the case (2). The latter is provided with ties (8) which provide the removable fixing of the umbrella holder inside the motor vehicle.

The umbrella holder according to the invention provides a fixed and pre-arranged housing for the umbrella inside the motor vehicle during the journey, preventing the umbrella (5) from moving in an undesirable or dangerous manner or making the inside wet.

Fig.1

EP 0 376 153 A2

## UMBRELLA HOLDER FOR MOTOR VEHICLES

The present invention relates to an umbrella holder device for motor vehicles in general.

For putting away an umbrella inside a motor vehicle (motor cars, buses, lorries etc.), specific devices or expedients are not conventionally provided. The umbrella is consequently simply placed on a seat or, if wet with rain, on the floor of the motor car.

The absence of a rational solution to the problem of putting away umbrellas in a satisfactory manner inside motor vehicles is the cause of many disadvantages. More precisely, an umbrella which is simply placed on a seat or in another location in the motor vehicle is not held in a fixed position and can therefore move in an undesirable manner, in addition to representing an annoying element of encumbrance (above all if wet and in an environment which is as restricted as the inside of a motor vehicle). In the event of sudden braking or road accidents, all the loose objects inside the motor vehicle, and in particular umbrellas, can furthermore represent a serious danger for the passengers.

The principal aim of the present invention is to produce an umbrella holder which is particularly suitable for applications in motor vehicles in general.

A further aim of the said invention is that of producing an umbrella holder for motor vehicles which, if necessary, can also be carried comfortably in the hand.

These and other aims are achieved with the umbrella holder for motor vehicles according to the present invention, which is essentially characterized in that it provides an umbrella holder sheath which is provided with means of removable fixing of the same inside the motor vehicle.

According to a further feature of the invention, the said sheath is constituted by a tubular case made of rigid material, the lower end of the said case being closed and the opposite end providing an upper opening and a longitudinal lateral slot to facilitate the insertion of the umbrella into the said case.

The said means of removable fixing of the umbrella holder according to the invention are constituted by ties which are fastened to the said case and can be tied to the seat of the motor vehicle.

According to an alternative embodiment, the umbrella holder according to the invention provides a sheath and a support which can be mutually connected in a removable manner, the said support being fixed on the inside of the motor vehicle. According to this alternative, the said support is fixed on the inside of the motor vehicle by means of ties, the said support and the said sheath being joined together by means of press-studs, clasps or a strip of touch-fastening fabric.

According to another feature of the same invention, the said sheath is made from impermeable fabric.

The umbrella holder according to the invention affords the advantage of constituting a secure housing for the umbrella in a fixed position inside the motor vehicle, and as a result is not very cumbersome and less annoying than it has been possible to achieve until now. A considerable advantage afforded by the invention is represented by the fact that the umbrellas are held still while the motor car is in motion, thus preventing their accidental movement in a violent or in any way dangerous manner for the passengers. The presence of the impermeable sheath furthermore prevents the umbrella making the inside of the motor car wet.

These and other advantages emerge from the following description of some preferred embodiments of the umbrella holder which are illustrated in the present invention, by way of non-limitative example, in the figures of the attached plates of drawings, in which

- Figure 1 illustrates a first embodiment of the umbrella holder according to the invention in a front and a side view;

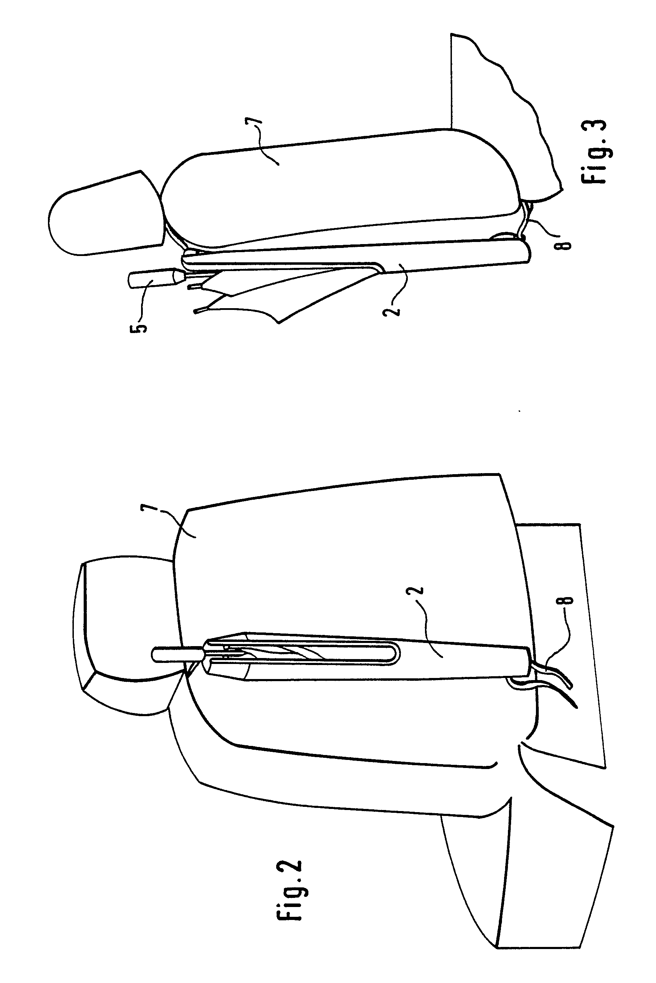

- Figures 2 and 3 illustrate in perspective and from the side respectively the umbrella holder from Figure 1 fixed to the chair of a motor car, and

- Figure 4 illustrates the umbrella holder according to the invention for comfortable carrying in the hand.

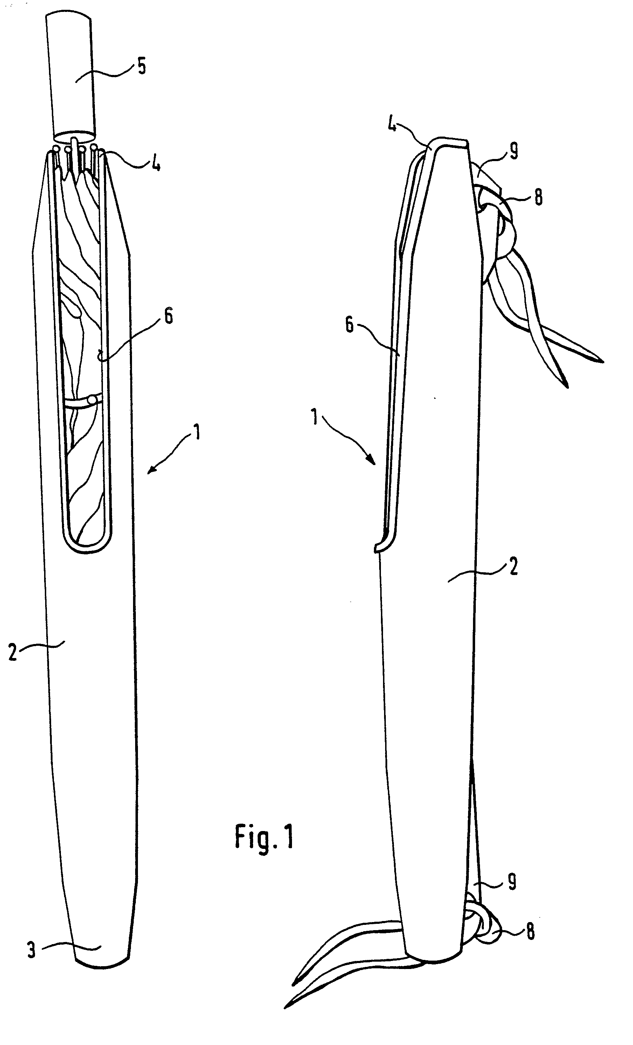

The umbrella holder according to the invention is indicated as a whole by 1 in Figure 1. It consists of a sheath constituted by a case 2 made of rigid and impermeable material which has an essentially tubular structure. The bottom 3 of the case 2 is closed while the opposite end provides an opening 4 for the insertion of the umbrella 5 into the sheath.

To facilitate the operation of accommodating the umbrella in the case 2, the said opening 4 continues longitudinally along one side of the umbrella holder, so as to create a lateral elongate hole or slot 6. By virtue of this, the umbrella 5 can be easily accommodated in or withdrawn from the case 2 with a movement of limited scope which can therefore comfortably be performed even in the restricted space of the inside of a motor car.

The fixing of the case 2 on the inside of the motor vehicle is carried out, in the embodiment illustrated, by means of ties or bands 8. In particular, the ties 8 can be tied to the support bracket of the headrest 9 and to the bottom of the seat 7. Clearly, in place of the ties 8, clasps or other devices for removable fixing could be used. The means of support of the umbrella holder could also be constituted by a side panel of the motor car, for example in conjunction with the fastenings of the safety belts, or in any other suitable location.

In the embodiment described, the water brought in by the umbrella drains inside the case 2 made of impermeable material, thus preventing the inside of the motor car being made wet. Rotation of the umbrella about its axis inside the case 2 confers on the umbrella 5 and umbrella holder 1 together a tidy and aesthetically pleasing appearance.

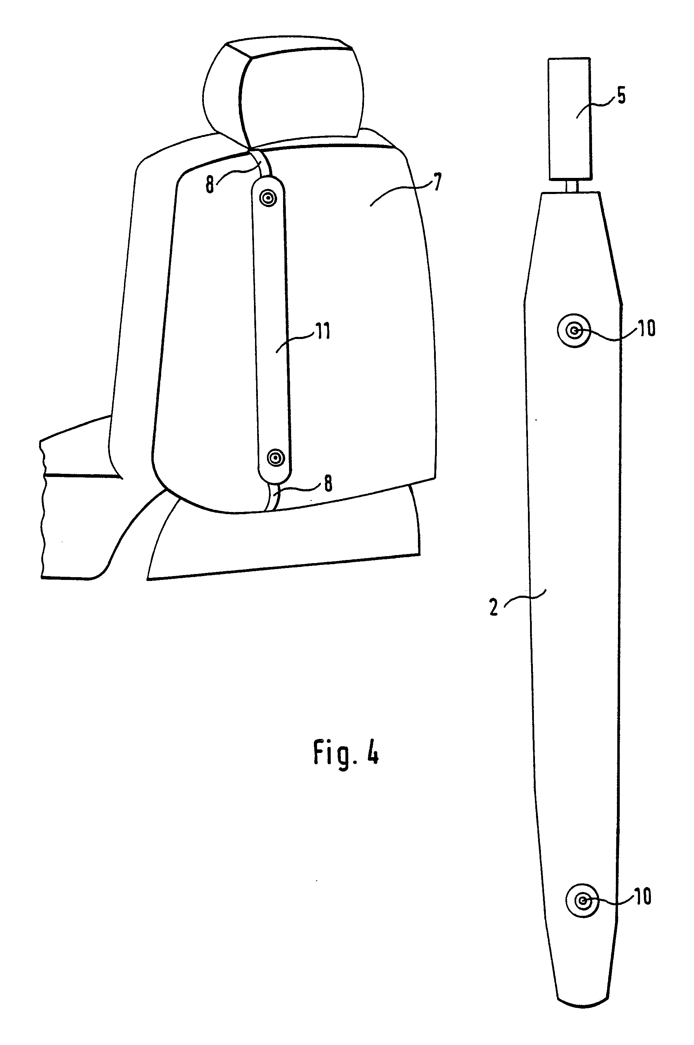

In the embodiment illustrated in Figure 4, the case 2 of the umbrella holder is constituted by a sheath made of flexible material (such as, for example, an impermeable synthetic fabric), the shape of which, with the umbrella 5 inserted in it, is essentially the same as that of the case 2 in Figure 1. In particular, the sheath made of flexible material of the umbrella holder in Figure 4 provides press-studs 10 which allow its removable fixing to the support of the umbrella holder 11. This support is essentially constituted by a strip or a band of material, for example identical to that of the case 2, fixed to the seat 7 of the motor car by means of the ties 8, which have been described above, or by other similar means.

This embodiment is particularly advantageous in allowing comfortable carrying in the hand of the umbrella holder which, once in the car, can be fixed to the seat by closing the studs 10 on the fixed support 11. Clearly, the said press-studs could be replaced by a clasp, by a strip of adhesive or touch-fastening fabric, or by other means of fixing, in a removable manner, the case 2 to the support 11.

As described and illustrated, it is possible to carry out modifications to the invention to produce alternatives which, however, fall within the scope of protection of the present patent. Thus, for example, the materials used could be different from those described now, just as the means used to fix the umbrella holder in any position on the inside of the motor car could be different.

## Claims

1. Umbrella holder for motor vehicles, characterized in that it provides an umbrella holder sheath which is provided with means of removable fixing of the same inside the motor vehicle.

2. Umbrella holder according to Claim 1, in which the said sheath is constituted by a tubular case (2) made of rigid material, the lower end (3) of the said case being closed and the opposite end providing an upper opening (4) and a longitudinal lateral slot (6) to facilitate the insertion of the umbrella into the said case.

3. Umbrella holder according to Claim 2, in which the said means of removable fixing of the umbrella holder according to the invention are constituted by ties (8) which are fastened to the said case (2) and can be tied to the seat of the motor vehicle.

4. Umbrella holder for motor vehicles, characterized in that it provides a sheath (2) and a support (11) which can be mutually connected in a removable manner, the said support (11) being fixed on the inside of the motor vehicle.

5. Umbrella holder according to Claim 4, in which the said support (11) is fixed on the inside of the motor vehicle by means of ties or bands 8, the said support and the said sheath (2) being joined together in a removable manner by means of press-studs (10), clasps or a strip of adhesive fabric.

6. Umbrella holder according to Claims 1 and 4, in which the said sheath (2) is made from impermeable fabric.

Fig. 1

Fig.3

Fig.2

Fig. 4